(19) Europäisches Patentamt
European Patent Office
Office européen des brevets

(11) EP 2 753 014 A2

(12) EUROPEAN PATENT APPLICATION

(43) Date of publication:
09.07.2014 Bulletin 2014/28

(51) Int Cl.:
$H04L\ 1/00^{(2006.01)}$

(21) Application number: 14150122.1

(22) Date of filing: 03.01.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 04.01.2013 TW 102100313

(71) Applicant: MStar Semiconductor, Inc.
Chupei 302 (TW)

(72) Inventors:
• Lai, Szu-Hsiang
302 Chupei (TW)
• Lai, Ko-Yin
302 Chupei (TW)

(74) Representative: Mollekopf, Gerd Willi
Kahler Käck Mollekopf
Vorderer Anger 239
86899 Landsberg (DE)

(54) **Signal processing method and associated receiver for digital television broadcasting system**

(57)    A method for processing a signal modulation signal applied to a signal receiver is provided. The method includes: demapping the modulation signal using a soft decision to generate a plurality of original probability values; scaling the original probability values by a scale factor to generate a plurality of scaled probability values; and updating the scale factor according to a statistical result of the scaled probability values.

FIG. 2

EP 2 753 014 A2

**Description**

BACKGROUND OF THE INVENTION

The invention relates in general to a scaling method and associated apparatus for a log likelihood ratio (LLR), and more particularly to a method and associated apparatus capable of automatically updating a scale factor of an LLR.

Description of the Related Art

The European Digital Television Broadcasting - Terrestrial (DVB-T) system, defined in early periods, is one of the most dominant digital television terrestrial broadcasting systems in the world. In the recent years, the modulation technology and the integrated circuit design technology have significantly progressed. The error correction code technology, previously considered as having too high calculation complexities and being cost-ineffective, has preferred error correction capabilities for increasing a system capacity as well as bandwidth utilization efficiency, and is also considered for a receiver of a communication system. Such trend is further reinforced by commercial requirements of high definition televisions (HDTV) in the recent years. Therefore, the DVB-T Second Generation (DVB-T2) is defined.

Compared to DVB-T, DVB-T2 adopts coded orthogonal frequency division multiplexing (COFDM), which employs constellations based on quadrature phase-shift keying (QPSK), 16-quadrature amplitude modulation (16-QAM), 64-QAM or 256-QAM. Forward error correction (FEC) in DVB-T2 utilizes a concatenated low-density parity check (LDPC) code as an internal code, a Bose, Ray-Chaudhuri and Hocquenghem (BCH) code as an external code, and coding rates 1/2, 3/5, 2/3, 3/4, 4/5 and 5/6.

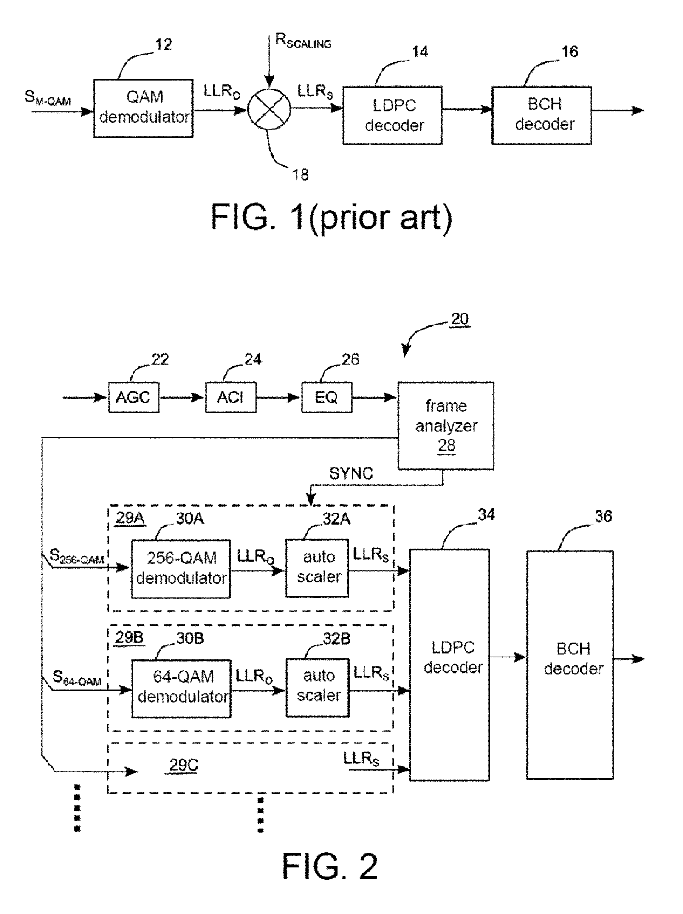

FIG. 1 shows a conventional DVB-T2 decoder, which includes a QAM demodulator 12, an LDPC decoder 14, and a BCH decoder 16. The QAM demodulator 12 corresponds to a QAM channel, and is capable of generating multiple log likelihood ratios $LLR_o$, from a modulation signal $S_{M-QAM}$, according to an internal constellation by a soft decision. The QAM demodulator 12 may include a QAM demapper. As known to a person having ordinary skill in the art, each log likelihood ratio is substantially associated with a probability value of a bit having a logic value "0" or "1". The LDPC decoder 14 collects the log likelihood ratios $LLR_o$, and decodes to obtain data before inserting the internal code according to LDPC. The BCH decoder 16 then obtains data before inserting the external code.

For a bit I, its log likelihood ratio $LLR_o$ is defined as:

$$LLR_o = \log(P(I=1)/P(I=0)).$$

In the above, P(I=1) represents the probability of I in logic "1", and P(I=0) represents the probability of I in logic "0". It is known from the definition of the log likelihood ratio $LLR_o$ that, a possible value range of the log likelihood ratio $LLR_o$ may from positive infinity to negative infinity. To provide the LDPC decoder 14 with a reasonable input value range and a sufficient input resolution, a scaler 18 scales up or scales down the log likelihood ratio $LLR_o$ according to a scale factor $R_{SCALING}$ to generate a scaled log likelihood ratio $LLR_S$ as an input to the LDPC decoder 14.

In the prior art, the scale factor $R_{SCALING}$ is a fixed value in circuit designs, and is however difficult to determine. In a specific environment of a corresponding QAM channel, a fixed scale factor $R_{SCALING}$ may enable to LDPC decoder 14 to converge during a decoding process. Once the environment of the corresponding QAM channel disappears, the fixed scale factor $R_{SCALING}$ may lead to a decoding failure of the LDPC decoder 14.

SUMMARY OF THE INVENTION

The invention is defined in claims 1, 7 and 10. Particular embodiments are set out in the dependent claims.

A modulation signal processing method for a signal receiver is provided according to an embodiment of the present invention. The modulation signal processing method includes: demodulating the modulation signal by a decision to generate a plurality of original probability values; scaling the original probability values by a scale factor to generate a plurality of scaled probability values; and updating the scale factor according to a statistical result of the scaled probability values.

A signal processing method, applied to a receiver of a Digital Television Broadcasting (DVB) system is provided according to an embodiment of the present invention. The signal processing method includes: demodulating a modulation signal to generate a plurality of log likelihood ratios; scaling the log likelihood ratios by a scale factor; obtaining a statistical result according to the scale factor and the log likelihood ratios; updating the scale factor according to the statistical result and a target value so that a subsequent statistical value approaches the target value; and decoding the scaled log likelihood ratios.

A receiver including a demodulator and a scaler is further provided according to an embodiment of the present invention. The demodulator demodulates a modulation signal to generate a plurality of log likelihood ratios. The scaler scales the log likelihood ratios by a scale factor to generate a plurality of scaled log likelihood ratios. The scaler includes a statistics calculator and an adjuster. The statistics calculator calculates a statistical result of the log likelihood ratios. The adjuster updates the scale factor according to the statistical result and a target value.

The above and other aspects of the invention will become better understood with regard to the following detailed description of the preferred but non-limiting embodiments. The following description is made with reference to the accompanying drawings.

BRIEF DESCRIPTION OF THE DRAWINGS

FIG. 1 shows a conventional DVB-T2 decoder;

FIG. 2 shows a receiver applicable to DVB-T2;

FIG. 3 shows an auto scaler in FIG. 1; and

FIGS. 4A to 4E show ranges of strength average values $A_{AVG-A}$ that allow an LDPC decoder to converge a result.

DETAILED DESCRIPTION OF THE INVENTION

In the following a method for processing a signal modulation signal applied to a signal receiver and respective receiver are provided and described in more detail. Summarizing, the method includes: demapping the modulation signal using a soft decision to generate a plurality of original probability values; scaling the original probability values by a scale factor to generate a plurality of scaled probability values; and updating the scale factor according to a statistical result of the scaled probability values.

FIG. 2 shows a receiver 20 for Digital Video Broadcasting - Terrestrial Generation Two (DVB-T2) according to an embodiment of the present invention. The receiver 20 is applicable to DVB-T2, and includes an auto-gain controller (AGC) 22, an adjacent-channel interference (ACI) suppresser 24, an equalizer (EQ) 26, a frame analyzer 28, demodulating and scaling devices 29A, 29B..., a low-density parity check (LDPC) decoder 34, and a Bose, Ray-Chaudhuri and Hocquenghem (BCH) decoder 36.

According to the DVB-T2 specification, at a transmitter, data is first organized in a plurality of baseband frames BBFRAMEs. Each of the baseband frames BBFRAMEs is encoded by BCH coding and appended by certain external codes, and then inserted with certain internal codes according to an LDPC code to generate a forward error correction frame FECFRAME. In other words, each forward error correction frame FECFRAME is a result of a baseband frame BBFRAME decoded according to FEC and added with certain messages for error correction.

A signal received by the receiver 20 is scaled up or scaled down by the AGC 22. The AGC 22 automatically controls the signal gain to limit a variation range of an output signal therefrom. The ACI suppresser 24, similar to a channel filter, declines signal energies of adjacent channels to prevent the signal energies from interfering a signal in the communication channel. The equalizer 26 reduces an inter-symbol interference (ISI), and eliminates a multi-path interference and a shadow effect resulted by an obstacle in a signal transmission path. The frame analyzer 28 determines whether a current data stream is from a same forward error correction frame FECFRAME, and accordingly provides a synchronization signal SYNC to the demodulating and scaling devices 29A, 29B, 29C...

Each demodulating and scaling device corresponds to one communication channel. The description below is given by taking the demodulating and scaling device 29A as an example. Details of other demodulating and scaling devices can be deduced accordingly, and shall be omitted herein. The demodulating and scaling device 29A corresponds to a 256-QAM channel, and includes a 256-QAM demodulator 30A and an auto scaler 32A. The 256-QAM demodulator 30A demodulates a modulation signal $S_{256\text{-}QAM}$ according to a 256-QAM constellation to obtain a cell word. The 256-QAM demodulates by using a soft decision, and outputs a cell word consisted of 8 log likelihood ratios $LLR_O$ each time. Each of the log likelihood ratios $LLR_O$ is associated with a probability value of a bit, in a word cell, in logic "0" or logic "1". The log likelihood ratios $LLR_O$ are scaled by the auto scaler 32A into scaled log likelihood ratios LLRs. A scale factor $R_{SCALING-A}$ of the auto scaler 32A, instead of being a fixed value, is a statistical result of the scaled log likelihood ratios $LLR_S$ of a previous forward error correction frame FECFRAME and is automatically and dynamically updated.

The LDPC decoder 34 and the BCH decoder 36 decode the scaled log likelihood ratios LLRs. The LDPC decoder 34 collects the scaled log likelihood ratios $LLR_S$ from the demodulating and scaling devices 29A, 29B..., and decodes according to LPDC to obtain data before inserting the internal codes. For example, the scaled log likelihood ratios $LLR_S$ are decoded according to the iterative belief propagation algorithm by The LDPC decoder 34. Then the external codes are removed from the output result from the LDPC decoder 34 by the BCH decoder 36, and data before adding the external codes is restored. The output data from the BCH decoder 36 is reconstructed and restored to a baseband frame BBFRAME.

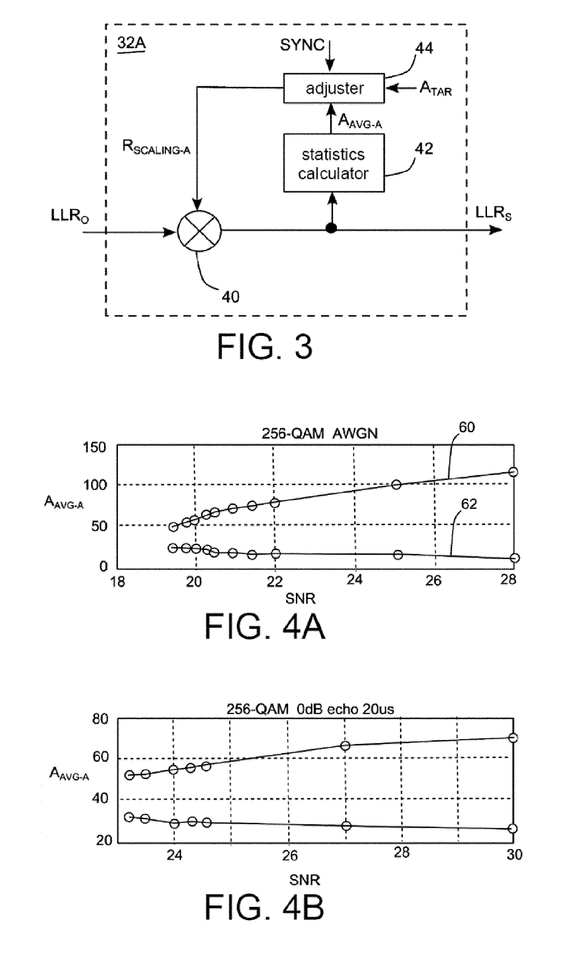

FIG. 3 shows an example of the auto scaler 32A in FIG. 2. A multiplier 40 scales up or scales down the log likelihood ratio $LLR_O$ according to the scale factor $R_{SCALING-A}$ into a scaled log likelihood ratio LLRs. A statistics calculator 42 calculates a statistical result of the scaled log likelihood ratio LLRs. In one embodiment, the statistical result is an average strength value of the scaled log likelihood ratio LLRs. For example, the statistics calculator 42 acquires an absolute value of each scaled log likelihood ratio $LLR_S$ as the signal strength, and calculates an average value of all the collected signal strengths in a same forward error correction frame FECFRAME to obtain an average strength value $A_{AVG-A}$.

When the synchronization signal SYNC informs that the forward error correction frame FECFRAME has ended, the adjuster 44 automatically updates or adjusts the scale factor $R_{SCALING-A}$ once the strength average value $A_{AVG-A}$ deviates from a predetermined average target value $A_{TAR-A}$, such that the corresponding strength average value $A_{AVG-A}$ generated from a subsequent forward error correction frame FECFRAME approximates or gets closer to the average target value $A_{TAR-A}$. For the log likelihood ratios $LLR_o$ of the same forward error correction frame FECFRAME, the scale factor $R_{SCALING-A}$ is a fixed value. In other words, the scale factor $R_{SCALING-A}$ is updated only when all the log likelihood ratios $LLR_o$ of the same forward error correction frame FECFRAME are scaled by the same scale factor $R_{SCALING-A}$. In an alternative embodiment, the scale factor $R_{SCALING-A}$ may be updated each time one forward error correction frame FECFRAME ends, or updated when several forward error correction frames FECFRAMEs end.

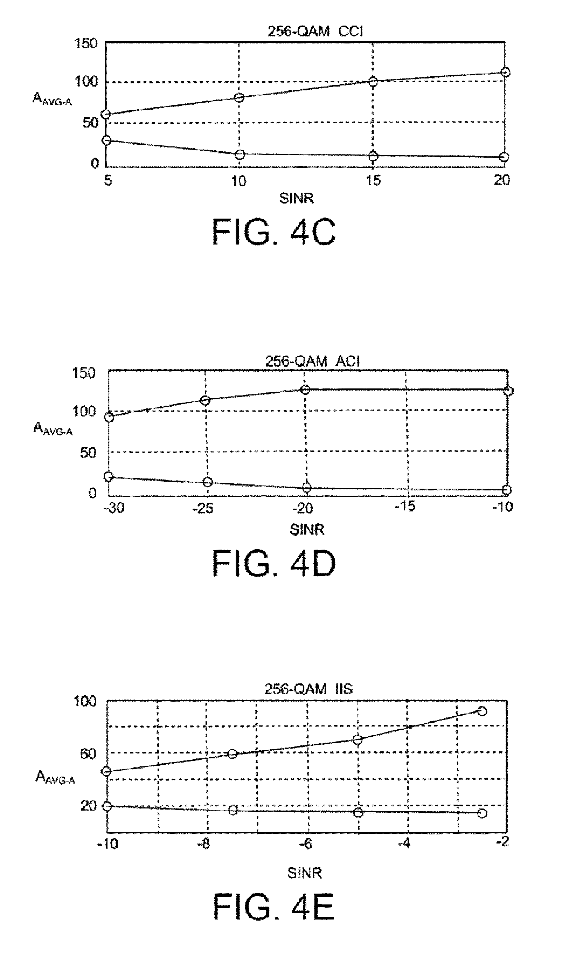

FIGS. 4A to 4E show the strength average value $A_{AVG-A}$ that allow the LDPC decoder 34 to converge a result when a 256-QAM communication channel is in different channel noise situations. Taking FIG. 4A for example, a channel used for simulation is 256-QAM, a noise model is an additive white Gaussian noise (AWGN) model, the vertical axis represents the strength average value $A_{AVG-A}$, and the horizontal axis represents the signal-to-noise ratio (SNR). A range between an upper curve 60 and a lower curve 62 indicates that the LDPC decoder 34 can provide a converged result. For example, when the SNR is 22dB, the simulation result in FIG. 4A indicates that when the strength average value $A_{AVG-A}$ is between 75 and 20, the LDPC decoder 34 is capable of converging for successful decoding. From FIG. 4A to FIG. 4E, one strength average value $A_{AVG-A}$, which substantially allows the LDPC decoder 34 for successful decoding under different noise models, can be found. For example, from FIG. 4A to FIG. 4E, for a 256-QAM communication channel, when the strength average value $A_{AVG-A}$ is set to around 40, the LDPC decoder 34 is allowed for successful decoding under the noise situations in FIG. 4A to FIG. 4E. Therefore, the target value $A_{TAR-A}$ in FIG. 3 may be set to 40, so that the strength average value $A_{AVG-A}$ gradually approaches or approximates 40 as the forward error correction frame FECFRAME increases.

For different communication channels, the same or different average target values may be selected.

The statistical result exemplified by the strength average value $A_{AVG-A}$ tracked and controlled by the auto scaler 32A in the embodiment of the present invention is for explaining the present invention, not to limit the present invention. For example, in an alternative embodiment, the auto scaler may track an average value of squares of the scaled log likelihood ratio $LLR_S$, or an average value of square roots of absolute values of the scaled log likelihood ratio LLRs.

In FIG. 2, each demodulating and scaling device includes one multiplier 40. In other embodiments, all the demodulating and scaling devices may share the same multiplier. Such multiplier may provide different scale factors $R_{SCALING-A}$ in different timeslots by a time-division approach to scale the log likelihood ratios $LLR_o$ from the corresponding demodulators. These scale factors $R_{SCALING-A}$ may be updated according to respective results of the respective scaled log likelihood ratio in respective timeslots.

While the invention has been described by way of example and in terms of the preferred embodiments, it is to be understood that the invention is not limited thereto. On the contrary, it is intended to cover various modifications and similar arrangements and procedures.

## Claims

1. A modulation signal processing method, applied to a signal receiver, in particular a receiver (20) according to any of claims 10 to 15, the method comprising:

   demodulating the modulation signal by a decision to generate a plurality of original probability values;
   scaling the original probability values by a scale factor to generate a plurality of scaled probability values; and
   updating the scale factor according to a statistical result of the scaled probability values.

2. The modulation signal processing method according to claim 1, wherein the original probability values are log likelihood ratios.

3. The modulation signal processing method according to claim 1 or 2, wherein the step of updating the scale factor according to the statistical result of the scaled probability values comprises:

   calculating a strength average value of the scaled probability values; and
   updating the scale factor according to the strength average value and a target strength average value.

4. The modulation signal processing method according to claim 3, wherein in the step of updating the scale factor according to the strength average value and the target strength average value, the updated scale factor renders a subsequent strength average value to be close to the target strength average value.

5. The modulation signal processing method according to any of claims 1 to 4, further comprising:

   selecting a communication channel and a constellation;

demodulating the modulation signal by the decision according to the constellation;

determining a statistical target according to the communication channel; and

updating the scale factor according to the statistical value so that a subsequent statistical result approaches the statistical target.

6. The modulation signal processing method according to any of claims 1 to 5, wherein the original probability values are from a forward error correction frame, and the scale factor is updated only when all of the original probability values are scaled.

7. A signal processing method, applied to a receiver of a Digital Television Broadcasting (DVB) system, in particular a receiver (20) according to any of claims 10 to 15, the method comprising:

demodulating a modulation signal to generate a plurality of log likelihood ratios;

scaling the log likelihood ratios by a scale factor;

obtaining a statistical result according to the scale factor and the log likelihood ratios;

updating the scale factor according to the statistical result and a target value so that a subsequent statistical result approaches the target value; and

decoding the scaled log likelihood ratios.

8. The signal processing method according to claim 7, wherein the statistical result is a strength average value of the scaled log likelihood ratios.

9. The signal processing method according to claim 8, wherein the log likelihood ratios are from a forward error correction frame, and the scale factor is updated only when all of the log likelihood ratios are scaled.

10. A receiver (20), comprising:

a demodulator (30A, B, C), configured to demodulate a modulation signal to generate a plurality of log likelihood ratios; and

a scaler (32A, B, C), configured to scale the log likelihood ratios by a scale factor to generate a plurality of scaled log likelihood ratios, comprising:

a statistics calculator (42), configured to calculate a statistical result of the scaled log likelihood ratios; and

an adjuster (44), configured to update the scale factor according to the statistical result and a target value.

11. The receiver according to claim 10, wherein the statistical result is a strength average value of the scaled log likelihood ratios.

12. The receiver according to claim 10 or 11, wherein the log likelihood ratios are from a forward error correction frame, and the adjuster updates the scale factor only when all of the log likelihood ratios are scaled.

13. The receiver according to claim 10, 11 or 12, further comprising: a frame analyzer (28), configured to provide a synchronization signal to determine whether the log likelihood ratios are from a same forward error correction frame.

14. The receiver according to any of claims 10 to 13, wherein the statistical result is an average value of squares of the scaled log likelihood ratios.

15. The receiver according to any of claims 10 to 14, wherein the log likelihood ratios are from a same forward error correction frame, and the statistical result is a statistical result of all of the log likelihood ratios of the forward error correction frame.

FIG. 1(prior art)

FIG. 2

FIG. 3

FIG. 4A

FIG. 4B

256-QAM CCI

$A_{AVG-A}$

FIG. 4C

256-QAM ACI

$A_{AVG-A}$

FIG. 4D

256-QAM IIS

$A_{AVG-A}$

FIG. 4E